# FASCICULE DE BREVET EUROPEEN

(11) **EP 1 245 349 B1**
(45) Date de publication et mention de la délivrance du brevet: **25.08.2004**
(21) Numéro de dépôt: 02380006.3
(22) Date de dépôt: 10.01.2002
(51) Int. Cl.: B25J 17/02, B23Q 1/48, B23Q 5/22, B23Q 1/54

(54) **Système cinématique pour poupée de machine**
Kinematisches System für eine bewegliche Maschinenplattform
Kinematical system for a movable platform of a machine

(30) Priorité: 28.03.2001 ES 200100722
(43) Date de publication de la demande: 02.10.2002
(73) Titulaire: FUNDACION FATRONIK, 20870 Elgoibar (Gipuzkoa) (ES)
(72) Inventeur: Saenz Fernandez, Agustin J., 20870 Elgoibar (ES); Collado Jimenez, Valentin, 20870 Elgoibar (ES); Gimenez Olazabal, Marta, 20870 Elgoibar (ES)
(74) Mandataire: Urizar Barandiaran, Miguel Angel

(56) Documents cités:
- DE-A- 19 614 641
- FR-A- 2 757 440
- US-A- 4 655 442
- US-A- 5 715 729
- US-A- 6 099 217

## Description

Le système cinématique pour poupée, qui fait l'objet de l'invention, est applicable à des poupées de machines-outils, telles que, par exemple, des fraiseuses, des centres d'usinage ou des machines automatiques d'assemblage.

Usuellement, les éléments ou bras porte-poupées travaillent en flexion, d'où des déformations importantes dues aux efforts énormes subis par la poupée.

En projetant ces machines, il existe la nécessité, pas toujours possible avec des systèmes cinématiques traditionnels, d'arriver à de grandes vitesses, ce qui, à son tour, est à l'origine du problème extrêmement grave d'atteindre ces vitesses dans des espaces et un temps extrêmement réduits ou, ce qui est la même chose, des accélérations très élevées.

Pour surmonter ces inconvénients le brevet US-6 099 217-A (voir Fig. 10-11), fondé sur la cinématique parallèle, décrit un système cinématique pour poupée de machine conformément au préambule de la revendication 1, et qui se compose de:
a) une première plateforme à laquelle sont fixés
b) trois guides de glissement avec leur glissière respective,
c) trois paires de bras, chaque bras étant uni, à l'une de ses extrémités, au moyen d'un joint sphérique, à une deuxième plateforme/poupée et, à l'autre extrémité, au moyen d'un joint sphérique à l'une de ces glissières, chaque paire de bras étant unie à la même glissière.

Ce système peut donner à la poupée trois degrés de liberté de translation dans les axes (OX, OY, OZ) mais ne peut donner de degré de liberté de rotation qu'au moyen d'un mouvement relatif des joints sphériques sur une même glissière.

Dans le système de l'invention défini dans la revendication 1, la rotation est obtenue autrement.

Avec le système de l'invention et le mouvement des bras mobiles, on réussit à faire que la poupée ait trois degrés de liberté, celui correspondant à l'axe OZ plus deux rotations spatiales, auxquels s'ajoutent les degrés de liberté dont jouit la première plateforme qui se compose usuellement de deux chariots (ou qui est située dessus) selon les axes OX et OY.

Pour mieux comprendre l'objet de la présente invention, on représente dans les plans une forme préférentielle de réalisation pratique, susceptible de changements accessoires qui n'en dénaturent pas le fondement.

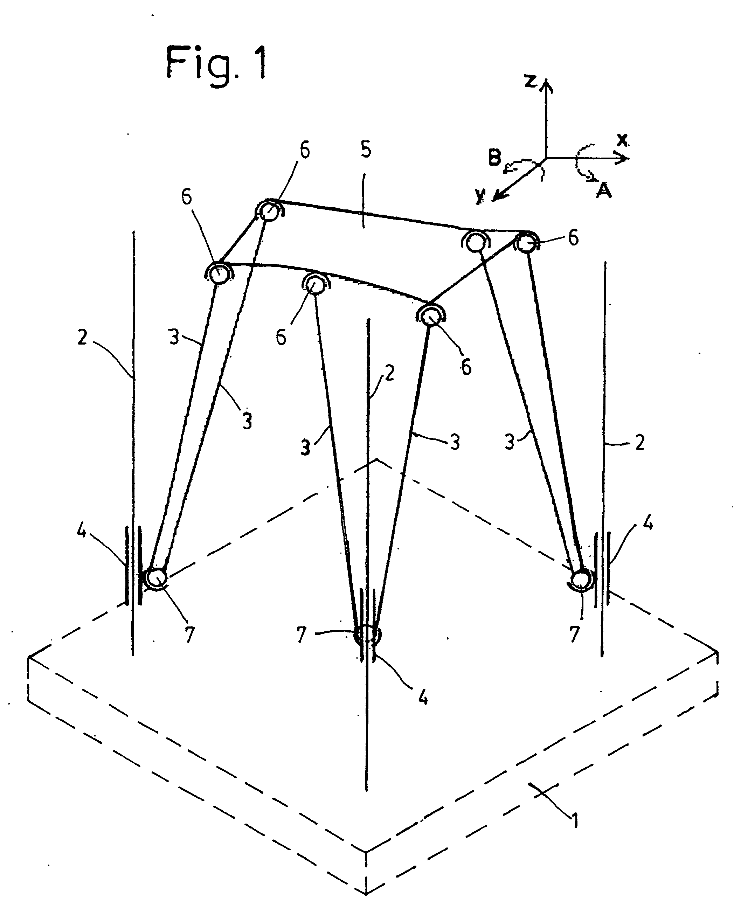

La figure 1 es une représentation schématique d'une réalisation pratique du système qui fait l'objet de l'invention.

On décrit ci-dessous un exemple de réalisation pratique, non limitative, de la présente invention.

On dispose une première plateforme (1), qui peut être fixe, mais dotée de préférence d'un mouvement selon les axes OX, OY, comme un chariot conventionnel d'une machine-outil.

Sur cette première plateforme (1), on assemble de façon rigide, en les vissant, par exemple, trois guides de glissement (2), qui peuvent se trouver dans une direction quelle qu'elle soit, mais, de préférence, parallèles entre elles et, dans ce cas et de façon particulière, ils seront disposés selon l'axe OZ, autrement dit perpendiculaires à la première plateforme (1), une glissière (4) étant disposée sur chacun d'entre eux.

On dispose six bras (3), la longueur de chaque bras étant constante et pouvant être différente d'un bras à l'autre.

Ces six bras (3) forment trois paires, que ce soit entre bras contigus (figure 1), en les alternant ou toute autre combinaison.

Chaque bras (3) est uni, à l'une de ses extrémités, au moyen d'un joint sphérique (6) (trois degrés de liberté) à une deuxième plateforme (5), qui constitue le plateau ou la poupée à laquelle est fixé l'outil, et à l'autre extrémité, au moyen d'un joint sphérique (7) à une glissière (4).

Les bras (3) de chaque paire sont unis à la même glissière (4) au(x) point(s) le(s) plus proche(s), mais de sorte que le mouvement de la glissière (4) implique le mouvement simultané des deux bras (3) de la paire correspondante. Les bras (3) de chaque paire n'ont pas à être parallèles.

Grâce au mouvement combiné des six bras (3), on obtient trois degrés de liberté pour la seconde plateforme (5) ou, ce qui est la même chose, pour l'outil: translation suivant l'axe OZ et les rotations A et B autour des axes OX et OY.

On dispose des moyens pour produire le mouvement des bras (3) et pour assurer le contrôle du mouvement-position de la seconde plateforme (5).

## Revendications

1. Système cinématique pour poupée de machine, comprenant :
a) une première plateforme (1) à laquelle sont fixés
b) trois guides de glissement (2) avec leur glissière (4) respective,
c) trois paires de bras (3), chaque bras (3) ayant une longueur constante et étant uni, à l'une de ses extrémités, au moyen d'un joint sphérique (6), à une deuxième plateforme/poupée (5) et, à l'autre extrémité, au moyen d'un joint sphérique (7), à l'une de ces glissières, chaque paire de bras étant unie à la même glissière, et **caractérisé en ce que**:
d) les six bras (3) n'ont pas tous la même longueur.

2. Système cinématique pour poupée de machine, selon la revendication 1, **se caractérisant par le fait que** la première plateforme (1) peut glisser suivant deux axes OX et OY.

3. Système cinématique pour poupée de machine, selon la revendication 1, **se caractérisant par le fait que** les guides de glissement (2) sont disposés suivant des directions parallèles.

4. Système cinématique pour poupée de machine, selon la revendication 3, **se caractérisant par le fait que** les directions parallèles sont perpendiculaires à la première plateforme (1).

5. Système cinématique pour poupée de machine, selon l'une des revendications antérieures, **se caractérisant par le fait qu'**il comprend des moyens pour produire le mouvement des bras (3) ainsi que des moyens de contrôle du mouvement et de la position de la seconde plateforme (5).

## Patentansprüche

1. Kinematisches System als Aufsatz für Maschinenköpfe, bestehend aus:
a) einer ersten Plattform, auf welcher
b) drei Gleitführungen (2) mit dem entsprechenden Gleitstück (4) und,
c) drei Armpaare (3) mit einer konstanten Länge befestigt sind, wobei jeder dieser Arme (3) an einem seiner Enden über ein Kugelgelenk (6) mit einer zweiten Plattform und Kopfstück (5) und am anderen Ende ebenfalls mit einem Kugelgelenk (7) an einem der genannten Gleitstücke befestigt ist, wobei jedes Armpaar an demselben Gleitstück angebunden ist, **dadurch gekennzeichnet, daß**
d) die sechs Arme (3) nicht alle dieselbe Länge haben.

2. Kinematisches System als Aufsatz für Maschinenköpfe nach dem Anspruch 1, **dadurch gekennzeichnet, daß** die Plattform (1) in Richtung der Achsen OX und OY verfahrbar ist.

3. Kinematisches System als Aufsatz für Maschinenköpfe nach dem Anspruch 1, **dadurch gekennzeichnet, daß** die Gleitführungen (2) in paralleler Ausrichtung angeordnet sind.

4. Kinematisches System als Aufsatz für Maschinenköpfe nach dem Anspruch 3, **dadurch gekennzeichnet, daß** die parallele Ausrichtung senkrecht zur ersten Plattform (1) vorgesehen ist.

5. Kinematisches System als Aufsatz für Maschinenköpfe nach einem beliebigen der obigen Ansprüche, **dadurch gekennzeichnet, daß** Mittel für das Einleiten der Bewegung der Arme (3) sowie Kontrollmaßnahmen für den Bewegungsablauf und die Positionierung der zweiten Plattform (5) vorhanden sind.

## Claims

1. Kinematic system for machine head, which is comprised of:
a) a first platform (1) which the following are secured to:
b) three guideways (2) with their relative sliders (4)
c) three pairs of arms (3), with fixed-length, each arm (3) being connected on one end to a second head platform (5) with a spherical joint (6) and on the other end to one of these sliders, with a spherical joint (7), each pair of arms being connected to the same slider, characterised because
d) the six arms (3) do not all have the same length.

2. Kinematic system for machine head, according to claim 1, characterised because the first platform (1) can be slid according to the two axes, OX and OY.

3. Kinematic system for machine head, according to claim 1, characterised because the guideways (2) are placed according to parallel directions.

4. Kinematic system for machine head, according to claim 3, characterised because the parallel directions are perpendicular to the first platform (1).

5. Kinematic system for machine head, according to one of the previous claims, characterised because it has the means to cause the movement of the arms (3) as well as control means for the movement and position of the second platform (5).
